# FASCICULE DE BREVET EUROPEEN

(11) **EP 1 898 481 B1**
(45) Date de publication et mention de la délivrance du brevet: **03.06.2009**
(21) Numéro de dépôt: 07291028.4
(22) Date de dépôt: 22.08.2007
(51) Int. Cl.: H01M 2/20, H01M 2/22, H01M 2/26, H01M 2/30

(54) **Dispositif de raccordement electrique pour borne de sortie d'un accumulateur de courant**
Vorrichtung mit elektrischem Anschluss für Ausgangsklemme eines Stromakkumulators
Electric connection device for output terminal of a current accumulator

(30) Priorité: 05.09.2006 FR 0607753
(43) Date de publication de la demande: 12.03.2008
(73) Titulaire: SAFT GROUPE SA, 93170 Bagnolet (FR)
(72) Inventeur: Masson, Olivier, 33440 Saint Vincent de Paul (FR); Rigobert, Gérard, 33370 Fargues St Hilaire (FR)
(74) Mandataire: Hirsch & Associés

(56) Documents cités:
- FR-A- 2 853 764
- US-A1- 2006 024 573

## Description

La présente invention se rapporte à un dispositif de raccordement électrique entre une borne de sortie de courant et un faisceau électrochimique dans un accumulateur, et à un procédé de fabrication associé.

Un générateur électrochimique ou accumulateur (ces deux termes étant équivalents, on utilisera le terme d'accumulateur dans la présente description) est un dispositif de production d'électricité dans lequel de l'énergie chimique est convertie en énergie électrique. L'énergie chimique est constituée par des composés électrochimiquement actifs déposés sur au moins une face d'électrodes disposées dans l'accumulateur. L'énergie électrique est produite par des réactions électrochimiques au cours d'une décharge de l'accumulateur. Les électrodes, disposées dans un conteneur, sont connectées électriquement à des bornes de sortie de courant qui assurent une continuité électrique entre les électrodes et un consommateur électrique auquel l'accumulateur est associé. Les bornes de sortie de courant positive et négative peuvent être fixées soit sur les parois de faces opposées du conteneur de l'accumulateur soit sur la paroi d'une même face du conteneur.

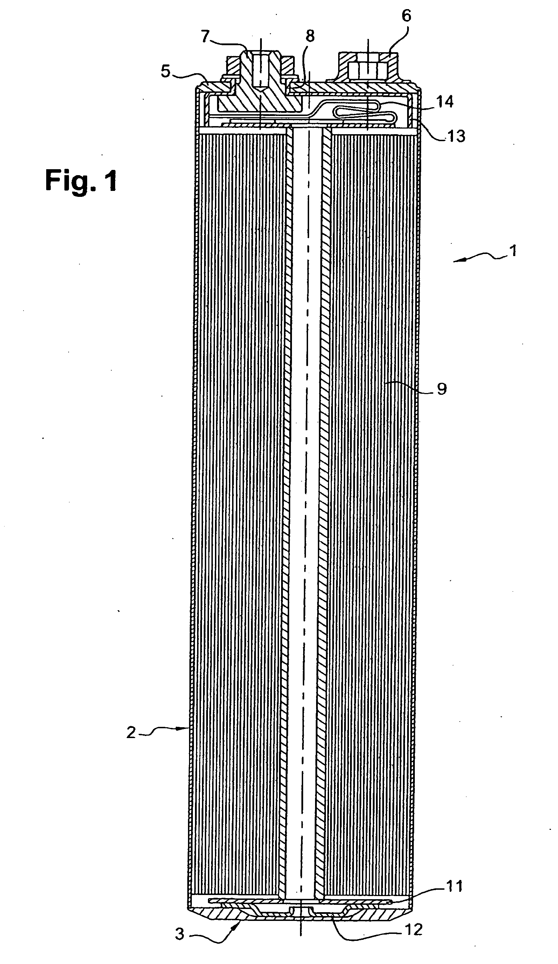

La Figure 1 montre un accumulateur cylindrique étanche de type connu.

Un accumulateur 1 comprend un faisceau électrochimique 9 comportant une alternance d'électrodes positives et négatives encadrant des séparateurs imprégnés d'électrolyte. Typiquement, chaque électrode est composée d'un collecteur de courant métallique, appelé aussi feuillard, supportant sur au moins une de ses faces la matière électrochimiquement active. Le faisceau électrochimique 9 est disposé dans un conteneur étanche 2 présentant une paroi cylindrique obturée par un fond 3 à une extrémité et couverte à l'autre extrémité par un couvercle 5 qui supporte des bornes de sortie de courant 6 et 7. Une première borne de sortie de courant, dans l'exemple la borne positive 6, est généralement soudée sur le couvercle. Une seconde borne de sortie de courant, dans l'exemple la borne négative 7, passe à travers le couvercle ; elle est généralement fixée sur celui-ci par sertissage et des joints 8 isolent électriquement la borne de sortie de courant négative 7 du couvercle 5.

Les bornes de sortie de courant 6, 7 assurent la continuité électrique entre les électrodes et l'application extérieure à laquelle l'accumulateur est associé. Il existe plusieurs façons de raccorder électriquement les électrodes d'une polarité à une des bornes de sortie de courant du conteneur. Une solution possible consiste à utiliser une connexion plane appliquée sur les collecteurs des électrodes d'une même polarité. Cette solution connue est illustrée sur la figure 1 ; une connexion plane 1 raccorde les électrodes positives du faisceau 9 entre elles et une pièce conformée conductrice 12 relie cette connexion plane 11 à la paroi du fond 3 du conteneur, les parois du conteneur étant électriquement conductrices avec le couvercle 5 et la borne positive 6 soudée au couvercle. De même, une connexion plane 13 raccorde les électrodes négatives du faisceau 9 entre elles et une languette 14 relie cette connexion plane 13 à la borne de sortie de courant négative 7. La languette 14 forme au moins un pliage afin d'apporter un effet élastique au raccordement électrique entre les électrodes négatives et la borne de sortie de courant négative qui compense les variations de hauteur des faisceaux électrochimiques d'un accumulateur à l'autre.

Typiquement, le dispositif de raccordement électrique à la borne traversante du conteneur - la borne négative dans l'exemple de la figure 1 - est assemblé de la façon suivante. La connexion plane 13 est soudée sur les collecteurs des électrodes d'une même polarité, puis la languette 14 est soudée à la connexion plane 13 et sur le pied de la borne traversante 7. La languette 14 est alors repliée dans l'accumulateur lors de la fermeture du conteneur 2 par le couvercle 5. L'opération de pliage et de positionnement de la languette dans l'accumulateur est généralement manuelle et compliquée.

EP-A-0 029 925 décrit un dispositif de raccordement électrique comprenant un disque plein disposé et soudé sur la tranche de l'enroulement des électrodes spiralées. Ce disque plein est muni d'une languette soudée à un disque de scellement en contact avec une des bornes de sortie de courant.

US-A-4 009 053 décrit dispositif de raccordement électrique comprenant une connexion plane circulaire portant des fentes radiales ayant la forme de crevés, dont les bords rabattus servent à établir le contact électrique avec les collecteurs des électrodes spiralées.

EP-A-1 102 337 décrit un accumulateur comprenant un faisceau d'électrodes spiralées. Chaque électrode comporte un feuillard métallique servant de collecteur de courant. Les feuillards d'une même polarité font respectivement saillie vers l'extérieur du faisceau électrochimique et sont courbés pour former une base plane sur laquelle est soudée une languette de connexion plane.

FR-2 748 606 décrit un procédé de raccordement par foisonnement. Les rives des électrodes sont rassemblées en deux demi-faisceaux raccordés horizontalement à une borne de sortie de courant.

EP-A-1 596 449 décrit un dispositif de raccordement comprenant une connexion plane soudée sur un socle sensiblement plan formé par les feuillards des électrodes d'une même polarité repliés. Une languette repliée est alors soudée entre la connexion plane et le pied de la borne de sortie de courant traversante.

US-A-3 761 314 décrit un dispositif de raccordement comprenant une connexion plane soudée sur les feuillards des électrodes d'une même polarité repliés. La connexion plane est en contact direct avec la borne de sortie de courant, l'élasticité de la connexion étant assurée par la pliure des feuillards des électrodes.

EP-A-0 955 682 décrit un dispositif de raccordement comprenant des bandes de connexion électrique soudées sur les extrémités repliées des feuillards des électrodes d'une même polarité.

Il existe un besoin pour un dispositif de raccordement électrique simplifié ; en particulier pour un dispositif de raccordement entre des électrodes d'une même polarité et une borne de sortie de courant traversante qui se dispense d'une languette de connexion et qui ne nécessite aucune soudure à la borne de sortie de courant.

A cet effet, l'invention propose d'utiliser un connecteur comprenant une connexion plane pour raccordement aux collecteurs des électrodes d'une même et un élément de connexion élastique adapté à assurer un contact électrique avec la borne traversante sans soudure.

Plus particulièrement, l'invention concerne un accumulateur étanche comprenant :
- un conteneur contenant un faisceau électrochimique comprenant une alternance d'électrodes positives et négatives encadrant des séparateurs imprégnés d'électrolyte ;
- une borne de sortie de courant traversant une paroi du conteneur ;
- un connecteur raccordant électriquement les électrodes d'une des polarités à la borne de sortie de courant traversante,
ledit connecteur comprenant une connexion plane soudée aux électrodes et une connexion élastique emboîtée à la borne traversante.

Selon un mode de réalisation, la connexion élastique comprend un pion entouré d'une bague souple pénétrant dans un évidement de la borne de sortie de courant traversante. La bague souple peut être monobloc avec le pion.

Selon un autre mode de réalisation, la connexion élastique comprend une couronne contenant une bague souple encerclant la borne de sortie de courant traversante. La bague souple peut être monobloc avec la couronne.

Selon un autre mode de réalisation, la connexion élastique comprend une lame ondulée pénétrant dans un évidement de la borne de sortie de courant traversante. La lame ondulée peut être constituée par une portion conformée de la connexion plane.

Selon un mode de réalisation, chaque électrode comprend un collecteur de courant métallique, les collecteurs étant repliés dans une direction sensiblement perpendiculaire à leur direction initiale d'une hauteur au moins égale à la distance les séparant des collecteurs voisins de la même polarité de manière à former un socle sensiblement plan et continu sur lequel est soudée la connexion plane du connecteur.

Selon un mode de réalisation, la borne de sortie de courant traversante est la borne négative et le connecteur est en matériau choisi parmi un composite Cu/Ni, le cuivre, le nickel ou l'acier inox.

Selon un mode de réalisation, la borne de sortie de courant traversante présente un axe de symétrie, le connecteur étant symétrique par rapport à cet axe.

L'invention concerne aussi un procédé de fabrication d'un accumulateur étanche comprenant les étapes consistant à :
- fabriquer un faisceau électrochimique comprenant une alternance d'électrodes positives et négatives encadrant des séparateurs imprégnés d'électrolyte;
- recevoir un connecteur comprenant une connexion plane et une connexion élastique à emboîter à une borne de sortie de courant;
- souder les électrodes d'une polarité à la connexion plane du connecteur et les électrodes de l'autre polarité à une deuxième connexion ;
- introduire le faisceau électrochimique muni des ses connexions dans un conteneur ;
- fermer le conteneur par un couvercle muni d'au moins une borne de sortie de courant traversant la paroi du couvercle ; et
- remplir le conteneur par de l'électrolyte,
la connexion élastique du connecteur s'emboîtant à la borne traversante lors de la fermeture du conteneur avec le couvercle.

D'autres caractéristiques et avantages de l'invention apparaîtront à la lecture de la description qui suit, donnée à titre d'exemple et en référence aux figures qui montrent :
- Figure 1, déjà décrite, une vue en coupe longitudinale d'un accumulateur cylindrique étanche selon un art antérieur ;
- Figure 2A, une vue en coupe du dispositif de raccordement électrique selon un premier mode de réalisation de l'invention;
- Figure 2B, une variante de réalisation du dispositif de raccordement électrique de la figure 2A ;
- Figure 3A, une vue en coupe du dispositif de raccordement électrique selon un deuxième mode de réalisation de l'invention ;
- Figure 3B, une variante de réalisation du dispositif de raccordement électrique de la figure 3A ;
- Figure 4A, une vue en coupe du dispositif de raccordement électrique selon un troisième mode de réalisation de l'invention ;
- Figure 4B, une variante de réalisation du dispositif de raccordement électrique de la figure 4A.

L'invention concerne un accumulateur étanche 1 comprenant un conteneur 2 contenant un faisceau électrochimique 9 et des bornes de sorties de courant 6, 7, avec une borne 6 ayant la même polarité que la paroi du conteneur et une borne 7 traversant la paroi du conteneur.

Selon l'invention, l'accumulateur comprend un connecteur 10 qui raccorde électriquement les électrodes d'une des polarités du faisceau électrochimique à la borne de sortie de courant traversante 7. Ce connecteur 10 comprend une connexion plane 15 soudées aux électrodes et une connexion élastique 20 emboîtée à la borne traversante.

Ce dispositif de raccordement électrique facilite considérablement la fabrication de l'accumulateur selon l'invention. Le dispositif de connexion est uniquement soudé aux collecteurs de courant des électrodes d'une même polarité, puis simplement emboîté avec la borne traversante. En particulier, la languette 14 de l'art antérieur assurant la continuité électrique entre la connexion plane 13 et le pied de la borne traversante 7 peut être supprimée. L'opération manuelle d'insertion et de pliage d'une languette de connexion à l'intérieur du conteneur est donc supprimée.

L'invention va être décrite ci-dessous en référence à trois modes de réalisation possibles donnés à titre d'exemples. Les éléments identiques à ceux décrits en référence à la figure 1 portent les mêmes numéros de référence.

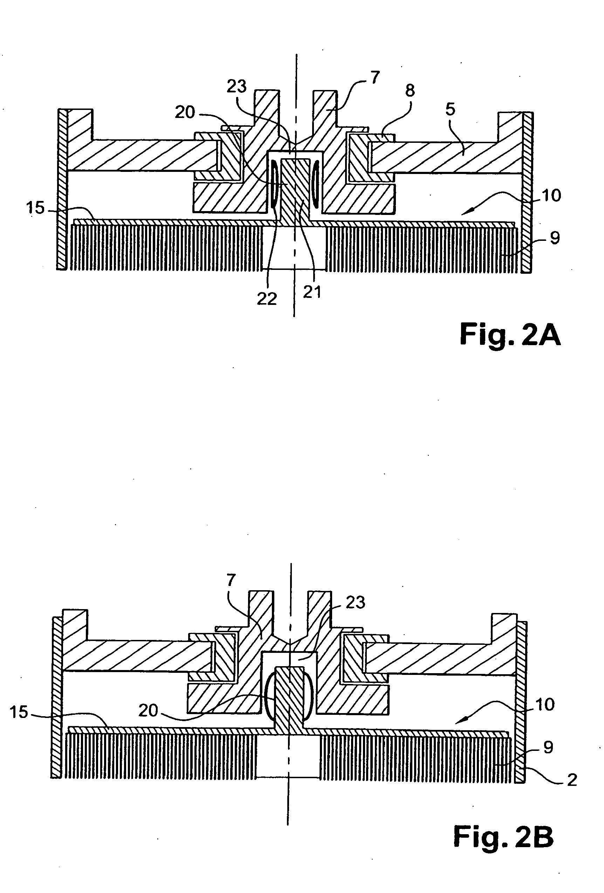

Les figures 2A et 2B illustrent un premier mode de réalisation de l'invention. L'accumulateur comprend un faisceau électrochimique 9 comportant une alternance d'électrodes positives et négatives encadrant des séparateurs imprégnés d'électrolyte. Les figures montrent uniquement le haut de l'accumulateur avec le couvercle 5 et une borne de sortie de courant 7 traversante. L'autre borne de sortie peut être située dans le fond du conteneur ou être constituée par les parois du conteneur. Sur les figures, la borne de sortie de courant traversante 7 est fixée à travers le couvercle 5 par sertissage et des joints 8 assurent l'étanchéité du conteneur et isolent électriquement la borne de sortie de courant 7 du couvercle 5.

Les figures montrent les extrémités des collecteurs de courant des électrodes d'une même polarité qui dépassent du faisceau électrochimique, c'est-à-dire l'extrémité des feuillards non couverts de matière active qui dépassent pour connexion vers une borne 7 de sortie de courant.

Les figures 2A et 2B montrent le connecteur 10 raccordant électriquement les collecteurs de courant à la borne de sortie de courant traversante 7. Ce connecteur 10 comprenant une connexion plane 15 qui est soudée aux extrémités des collecteurs et une connexion élastique 20 qui est emboîtée dans la borne traversante 7. La connexion plane 15 peut être un disque métallique ou une bande métallique faisant contact avec l'ensemble des collecteurs de courant des électrodes d'une même polarité. Le courant produit par les réactions électrochimiques entre chaque électrode est ainsi recueilli sur la connexion plane 15. La connexion élastique 20 peut être un pion 21 entouré d'une bague souple 22. Cette connexion élastique 20 est emboîtée dans la borne de sortie de courant 7 ; l'emboîtement est assuré par le pion 21 et la bague souple 22 pénétrant dans un évidement 23 de la borne 7.

Le pion 21 présente une hauteur suffisante pour garantir un bon maintien du pion dans l'évidement et assurer un contact électrique avec la borne de sortie de courant 7 malgré des variations de hauteur tolérables entre les faisceaux électrochimiques d'un accumulateur à l'autre. La hauteur du pion 21 peut être de l'ordre de 6 mm pour des faisceaux électrochimiques d'environ 11 cm de hauteur et de l'ordre de 12 mm pour des faisceaux de l'ordre de 20 cm de hauteur.

La bague souple 22 absorbe le jeu entre le diamètre extérieur du pion 21 et le diamètre intérieur de l'évidement 23 de la borne 7 pour assurer un bon contact électrique entre le pion et la borne emboîtée. Ce jeu est nécessaire pour permettre un emboîtement facile du pion dans la borne et pour absorber des variations de positionnement relatif entre le pion et la borne.

La bague souple 22 peut être monobloc avec le pion, comme illustré sur la figure 2B. En outre, le pion 21 peut être monobloc avec la connexion plane 15. Par exemple, la connexion plane 15, le pion 21 et la bague 22 peuvent être fabriqués comme une seule pièce métallique. Si la borne traversante 7 est la borne négative, on peut fabriquer le connecteur 10 - pion, bague et connexion plane - en matériau composite Cu/Ni, cuivre, nickel ou acier inox.

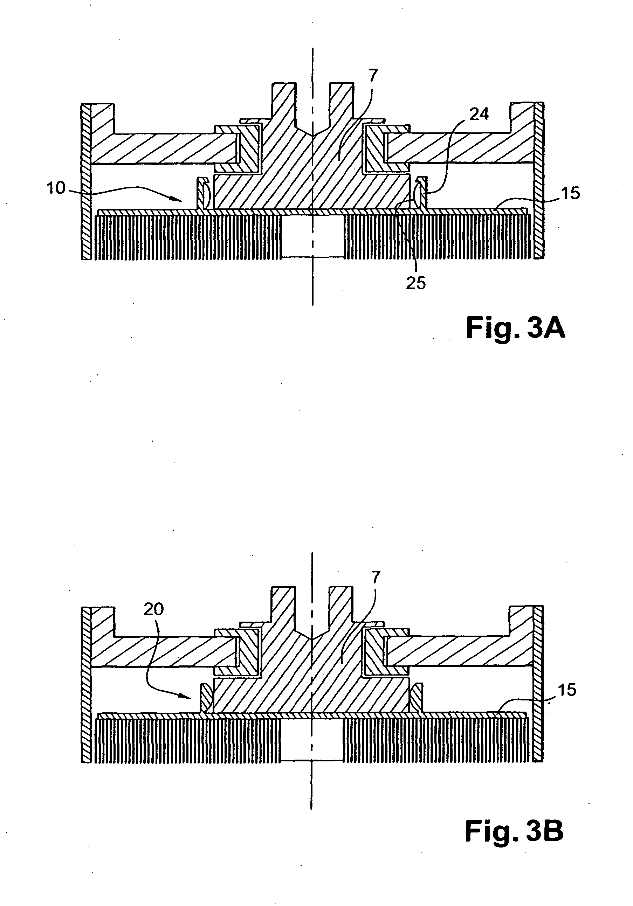

Les figures 3A et 3B illustrent un deuxième mode de réalisation de l'invention. Selon ce mode de réalisation, le connecteur 10 raccordant électriquement les collecteurs de courant à la borne de sortie de courant traversante 7 comprend une connexion plane 15 qui est soudée aux extrémités des collecteurs et une connexion élastique 20 qui est emboîtée sur la borne traversante 7.

La connexion élastique 20 peut être une couronne 24 contenant une bague souple 25. Cette connexion élastique 20 est emboîtée sur la borne de sortie de courant 7 ; l'emboîtement est assuré par la couronne 24 et de la bague souple 25 enserrant la périphérie de la borne 7.

La couronne 24, tout comme le pion 21 des figures 2A et 2B, présente une hauteur suffisante pour garantir un contact électrique avec la borne de sortie de courant 7 malgré des variations de hauteur tolérables entre les faisceaux électrochimiques d'un accumulateur à l'autre. La hauteur de la couronne 24 peut être de l'ordre de 6 mm pour des faisceaux électrochimiques d'environ 11 cm de hauteur et de l'ordre de 12 mm pour des faisceaux de l'ordre de 20 cm de hauteur.

La bague souple 25 absorbe le jeu entre le diamètre intérieur de la couronne 24 et le diamètre extérieur de la borne 7 pour assurer un bon contact électrique entre le pion et la borne emboîtée. Ce jeu est nécessaire pour permettre un emboîtement facile de la borne dans la couronne 24 et pour absorber des variations de positionnement relatif entre la couronne 24 et la borne.

Tout comme expliqué précédemment, la bague souple 25 peut être monobloc avec la couronne 24, comme illustré sur la figure 3B. En outre, la couronne 24 peut être monobloc avec la connexion plane 15. Par exemple, la connexion plane 15, la couronne 24 et la bague 25 peuvent être fabriqués comme une seule pièce métallique, par exemple en matériau composite Cu/Ni, cuivre, nickel ou acier inox.

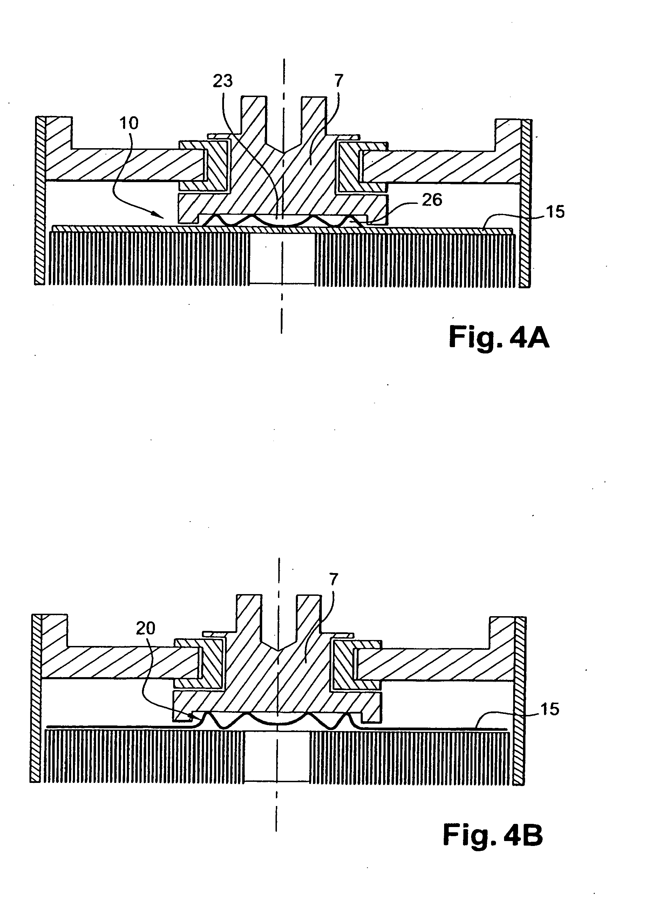

Les figures 4A et 4B illustrent un troisième mode de réalisation de l'invention. Selon ce mode de réalisation, le connecteur 10 raccordant électriquement les collecteurs de courant à la borne de sortie de courant traversante 7 comprend une connexion plane 15 qui est soudée aux extrémités des collecteurs et une connexion élastique 20 qui est emboîtée dans la borne traversante 7.

La connexion élastique 20 peut être une lame ondulée 26 emboîtée dans un évidement 23 de la borne de sortie de courant 7 ; l'emboîtement est assuré par recouvrement de la lame ondulée 26 par l'évidement 23 de la borne 7.

La lame ondulée 26 présente une amplitude d'ondulation telle que la hauteur des bosses est suffisante pour garantir un contact électrique avec la borne de sortie de courant 7 malgré des variations de hauteur tolérables entre les faisceaux électrochimiques d'un accumulateur à l'autre. L'amplitude des ondulations - soit la hauteur entre un creux et une bosse - de la lame 26 peut être de l'ordre de 3 mm pour des faisceaux électrochimiques d'environ 11 cm de hauteur et de l'ordre de 6 mm pour des faisceaux de l'ordre de 20 cm de hauteur.

La surface de la lame ondulée 26 est plus petite que la surface de l'évidement 23 de la borne 7 pour garantir que les ondulations pénètrent bien dans l'évidement de la borne afin d'assurer un bon contact électrique entre le pion et la borne emboîtée.

La lame ondulée 26 peut également être monobloc avec la connexion plane 15, comme illustré sur la figure 4B. Par exemple, la connexion plane 15 peut présenter une portion conformée avec des ondulations 26 qui constitue la connexion élastique 20 du connecteur 10.

Par ailleurs, la borne de sortie de courant traversante 7 peut présenter un axe de symétrie. On cherchera alors à former un connecteur 10 qui soit symétrique par rapport à cet axe afin de simplifier l'emboîtement de la connexion élastique 20 à la borne de sortie de courant 7.

Un procédé de fabrication possible d'un accumulateur selon l'invention est maintenant décrit. Cette description se réfère à un accumulateur cylindrique.

Un faisceau électrochimique est fabriqué. L'électrode positive est constituée d'un collecteur de courant, qui peut être un feuillard en aluminium, recouvert de matière active constituée d'un oxyde lithié de métaux de transition tel que LiCoO₂, LiNiO₂, LiMnO₂, LiMn₂O₄, ou un mélange de ceux-ci. L'électrode négative est constituée d'un collecteur de courant, qui peut être un feuillard en cuivre, recouvert de matière active constituée d'un matériau capable d'insérer réversiblement du lithium tel que le graphite, le coke, le carbone vitreux et le noir de carbone. Le séparateur peut être en polyoléfine. On superpose au moins une électrode positive, au moins un séparateur et au moins une électrode négative pour former le faisceau électrochimique 9. On enroule le faisceau électrochimique autour de l'axe creux qui peut être en aluminium, polypropylène, polyéthylène ou ultem^{®}.

Un connecteur 10, comprenant une connexion plane 15 et une connexion élastique à emboîter à une borne de sortie de courant, est fourni. Un tel connecteur 10 peut avoir été fabriqué par usinage ou moulage d'un composite métallique compatible avec les électrodes de la polarité destinées à être reliées à la borne de sortie de courant traversant la paroi du conteneur.

On soude ensuite les électrodes d'une polarité - par exemple négative - à la connexion plane 15 du connecteur 10 et les électrodes de l'autre polarité - par exemple positive - à une connexion destinée à contacter le fond du conteneur.

Selon un mode de réalisation, les feuillards métalliques des électrodes peuvent être repliés dans une direction sensiblement perpendiculaire à leur direction initiale d'une hauteur au moins égale à la distance les séparant des collecteurs voisins de la même polarité de manière à former un socle sensiblement plan et continu sur lequel est soudée la connexion plane 15 du connecteur 10.

On introduit alors le faisceau électrochimique 9 muni des ses connexions dans le conteneur 2. On ferme le conteneur de façon étanche en soudant sur l'extrémité ouverte du conteneur 2 un couvercle 5 muni d'au moins une borne de sortie de courant 7 traversant la paroi du couvercle.

Lorsque l'on ferme le conteneur avec le couvercle muni de la borne de sortie traversante 7, la connexion élastique 20 du connecteur 10 va s'emboîter à la borne traversante 7. L'opération de positionnement et de pliage d'une languette à souder au pied de la borne traversante 7 est donc supprimée. La fabrication de l'accumulateur est simplifiée. L'imprégnation des électrodes et des séparateurs ainsi que le remplissage du conteneur par l'électrolyte est effectué sous dépression d'air dans le conteneur.

Les modes de réalisation décrits ci-dessus et les figures doivent être considérés comme ayant été présentés à titre illustratif et non restrictif, et l'invention n'est pas censée être limitée aux détails fournis ici mais peut être modifiée en restant dans le cadre de la portée des revendications annexées. En particulier, l'invention concerne tout type d'accumulateur, qu'il soit prismatique, cylindrique ou concentrique ; ou qu'il soit du type lithium-ion, nickel cadmium ou nickel métal hydrure.

## Revendications

1. Accumulateur étanche (1) comprenant :
- un conteneur (2) contenant un faisceau électrochimique (9) comprenant une alternance d'électrodes positives et négatives encadrant des séparateurs imprégnés d'électrolyte ;
- une borne de sortie de courant (7) traversant une paroi (5) du conteneur ;
- un connecteur (10) raccordant électriquement les électrodes d'une des polarités à la borne de sortie de courant traversante (7),
ledit connecteur comprenant une connexion plane (15) soudée aux électrodes et une connexion élastique (20) emboîtée à la borne traversante.

2. Accumulateur selon la revendication 1, dans lequel la connexion élastique (20) comprend un pion (21) entouré d'une bague souple (22) pénétrant dans un évidement (23) de la borne de sortie de courant traversante (7).

3. Accumulateur selon la revendication 2, dans lequel la bague souple est monobloc avec le pion.

4. Accumulateur selon la revendication 1, dans lequel la connexion élastique (20) comprend une couronne (24) contenant une bague souple (25) encerclant la borne de sortie de courant traversante (7).

5. Accumulateur selon la revendication 4, dans lequel la bague souple est monobloc avec la couronne.

6. Accumulateur selon la revendication 1, dans lequel la connexion élastique (20) comprend une lame ondulée (26) pénétrant dans un évidement (23) de la borne de sortie de courant traversante (7).

7. Accumulateur selon la revendication 6, dans lequel la lame ondulée est constituée par une portion conformée de la connexion plane (15).

8. Accumulateur selon l'une des revendications 1 à 7, dans lequel chaque électrode comprend un collecteur de courant métallique, les collecteurs étant repliés dans une direction sensiblement perpendiculaire à leur direction initiale d'une hauteur au moins égale à la distance les séparant des collecteurs voisins de la même polarité de manière à former un socle sensiblement plan et continu sur lequel est soudée la connexion plane (15) du connecteur (10).

9. Accumulateur selon l'une des revendications 1 à 8, dans lequel la borne de sortie de courant traversante (7) est la borne négative et le connecteur (10) est en matériau choisi parmi un composite Cu/Ni, le cuivre, le nickel ou l'acier inox.

10. Accumulateur selon l'une des revendications 1 à 9, dans lequel la borne de sortie de courant traversante (7) présente un axe de symétrie, le connecteur (10) étant symétrique par rapport à cet axe.

11. Procédé de fabrication d'un accumulateur étanche (1) comprenant les étapes consistant à :
- fabriquer un faisceau électrochimique (9) comprenant une alternance d'électrodes positives et négatives encadrant des séparateurs imprégnés d'électrolyte ;
- recevoir un connecteur (10) comprenant une connexion plane (15) et une connexion élastique (20) à emboîter à une borne de sortie de courant ;
- souder les électrodes d'une polarité à la connexion plane (15) du connecteur (10) et les électrodes de l'autre polarité à une deuxième connexion (11) ;
- introduire le faisceau électrochimique (9) muni des ses connexions (10, 11) dans un conteneur (2) ;
- fermer le conteneur par un couvercle (5) muni d'au moins une borne de sortie de courant (7) traversant la paroi du couvercle ; et
- remplir le conteneur par de l'électrolyte,
la connexion élastique (20) du connecteur (10) s'emboîtant à la borne traversante (7) lors de la fermeture du conteneur avec le couvercle.

## Claims

1. A sealed storage battery (1) comprising:
- a container (2) containing an electrode plate group (9) comprising alternating positive and negative electrodes flanking electrolyte-impregnated separators;
- a current output terminal (7) passing through a wall (5) of the container;
- a connector (10) electrically connecting the electrodes of one polarity to the terminal (7) passing through a wall of the container,
said connector comprising a flat connection (15) welded to said electrodes and a yielding connection (20) which is nested into said terminal passing through a wall of the container.

2. The storage battery according to claim 1, in which the yielding connection (20) comprises a stud (21) surrounded by a flexible ring (22) and penetrating into a recess (23) of the terminal (7) passing through a wall of the container.

3. The storage battery according to claim 2, in which the flexible ring is of a one-piece construction with the stud.

4. The storage battery according to claim 1, in which the yielding connection (20) comprises a crown (24) containing a flexible ring (25) encircling the terminal (7) passing through a wall of the container.

5. The storage battery according to claim 4, in which the flexible ring is of a one-piece construction with the crown.

6. The storage battery according to claim 1, in which the yielding connection (20) comprises a corrugated plate (26) penetrating into a recess (23) of the terminal (7) passing through a wall of the container.

7. The storage battery according to claim 6, in which the corrugated plate is constituted by a shaped portion of said flat connection (15).

8. The storage battery according to one of claims 1-7, in which each electrode comprises a metal current collector, the collectors being folded over in a direction substantially perpendicular to their initial direction over a height at least equal to the distance separating them from adjoining collectors of the same polarity so as to form a substantially planar and continuous baseplate on which the flat connection (15) of the connector (10) his welded.

9. The storage battery according to one of claims 1-8, in which the output terminal (7) passing through a wall of the container is the negative terminal and the connector (10) is of a material selected from the group consisting of a Cu/Ni composite, copper, nickel or stainless steel.

10. The storage battery according to one of claims 1-9, in which the output terminal (7) passing through a wall of the container has an axis of symmetry, the connector (10) being symmetrical with respect to this axis.

11. A method for producing a sealed storage battery (1) comprising the steps consisting of:
- producing an electrode plate group (9) comprising alternating positive and negative electrodes flanking electrolyte-impregnated separators;
- receiving a connector (10) comprising a flat connection (15) and a yielding connection (20) to be nested into a current output terminal;
- welding the electrodes of one polarity to the flat connection (15) of the connector (10) and the electrodes of the other polarity to a second connection (11);
- introducing the electrode plate group (9) provided with its connections (10, 11) into a container (2);
- closing the container by a lid (5) provided with at least one current output terminal (7) passing through a wall of the cover; and
- filling the container with the electrolyte,
the yielding connection (20) of the connector (10) nesting into the terminal (7) passing through a wall of the lid when the container is closed with the lid.

## Patentansprüche

1. Dichter Akkumulator (1), welcher umfasst:
- einen Behälter (2), der ein elektrochemisches Bündel (9) enthält, das eine abwechselnde Folge von positiven und negativen Elektroden umfasst, die mit Elektrolyt getränkte Separatoren umrahmen;
- eine Stromausgangsklemme (7), die eine Wand (5) des Behälters durchquert;
- einen Verbinder (10), der die Elektroden einer der Polaritäten elektrisch an die durchquerende Stromausgangsklemme (7) anschließt,
wobei der Verbinder ein ebenes Verbindungsstück (15), das an die Elektroden angeschweißt ist, und ein elastisches Verbindungsstück (20), das an die durchquerende Klemme angefügt ist, umfasst.

2. Akkumulator nach Anspruch 1, wobei das elastische Verbindungsstück (20) einen von einer flexiblen Hülse (22) umgebenen Stift (21) umfasst, der in eine Aussparung (23) der durchquerenden Stromausgangsklemme (7) eindringt.

3. Akkumulator nach Anspruch 2, wobei die flexible Hülse mit dem Stift aus einem Stück hergestellt ist.

4. Akkumulator nach Anspruch 1, wobei das elastische Verbindungsstück (20) einen Kranz (24) umfasst, der eine flexible Hülse (25) enthält, welche die durchquerende Stromausgangsklemme (7) umschließt.

5. Akkumulator nach Anspruch 4, wobei die flexible Hülse mit dem Kranz aus einem Stück hergestellt ist.

6. Akkumulator nach Anspruch 1, wobei das elastische Verbindungsstück (20) ein gewelltes Plättchen (26) umfasst, das in eine Aussparung (23) der durchquerenden Stromausgangsklemme (7) eindringt.

7. Akkumulator nach Anspruch 6, wobei das gewellte Plättchen von einem an die Form des ebenen Verbindungsstückes (15) angepassten Teil gebildet wird.

8. Akkumulator nach einem der Ansprüche 1 bis 7, wobei jede Elektrode einen metallischen Stromkollektor umfasst, wobei die Kollektoren in einer Richtung, die im Wesentlichen zu ihrer ursprünglichen Richtung senkrecht ist, um eine Höhe, die mindestens gleich dem sie von den benachbarten Kollektoren mit derselben Polarität trennenden Abstand ist, umgebogen sind, derart, dass ein im Wesentlichen ebener und durchgehender Sockel gebildet wird, an welchen das ebene Verbindungsstück (15) des Verbinders (10) angeschweißt ist.

9. Akkumulator nach einem der Ansprüche 1 bis 8, wobei die durchquerende Stromausgangsklemme (7) die negative Klemme ist und der Verbinder (10) aus einem Material hergestellt ist, das aus einem Verbundstoff Cu/Ni, Kupfer, Nickel oder nichtrostendem Stahl gewählt ist.

10. Akkumulator nach einem der Ansprüche 1 bis 9, wobei die durchquerende Stromausgangsklemme (7) eine Symmetrieachse aufweist, wobei der Verbinder (10) symmetrisch bezüglich dieser Achse ist.

11. Verfahren zur Herstellung eines dichten Akkumulators (1), welches die folgenden Schritte umfasst:
- Herstellen eines elektrochemischen Bündels (9), das eine abwechselnde Folge von positiven und negativen Elektroden umfasst, die mit Elektrolyt getränkte Separatoren umrahmen;
- Aufnehmen eines Verbinders (10), der ein ebenes Verbindungsstück (15) und ein elastisches Verbindungsstück (20) zum Anfügen an eine Stromausgangsklemme umfasst;
- Anschweißen der Elektroden einer Polarität an das ebene Verbindungsstück (15) des Verbinders (10) und der Elektroden der anderen Polarität an ein zweites Verbindungsstück (11),
- Einführen des mit seinen Verbindungsstücken (10, 11) ausgestatteten elektrochemischen Bündels (9) in einen Behälter (2);
- Verschließen des Behälters mit einer Abdeckung (5), die mit mindestens einer Stromausgangsklemme (7) ausgestattet ist, welche die Wand der Abdeckung durchquert; und
- Füllen des Behälters mit Elektrolyt,
wobei das elastische Verbindungsstück (20) des Verbinders (10) beim Verschließen des Behälters mit der Abdeckung an die durchquerende Klemme (7) angefügt wird.
